(19) Europäisches Patentamt
European Patent Office
Office européen des brevets

(11) Veröffentlichungsnummer : **0 437 416 A2**

(12) **EUROPÄISCHE PATENTANMELDUNG**

(21) Anmeldenummer : **91810005.8**

(22) Anmeldetag : **03.01.91**

(51) Int. Cl.[5] : **C10M 139/00**, C10M 159/18, C10L 1/30, C08K 5/17, C08K 5/55, C07F 5/04, C07F 7/00, C07F 9/00, C07F 9/90, C07F 19/00, C07C 323/25

(30) Priorität : **11.01.90 CH 85/90**

(43) Veröffentlichungstag der Anmeldung : **17.07.91 Patentblatt 91/29**

(84) Benannte Vertragsstaaten : **DE FR GB IT**

(71) Anmelder : **CIBA-GEIGY AG**
**Klybeckstrasse 141**
**CH-4002 Basel (CH)**

(72) Erfinder : **Wirth, Hermann Otto, Dr.**
**Lessingstrasse 24**
**W-6140 Bensheim 3 (DE)**
Erfinder : **Friedrich, Hans-Helmut**
**Am Rauhenstein 8**
**W-6147 Lautertal 2 (DE)**

(54) **Zusammensetzungen, enthaltend 2,2',2"-Nitrilotriethanol-Cyclometallate.**

(57) Es werden Zusammensetzungen beschrieben, enthaltend
a) eine funktionelle Flüssigkeit oder einen Verbrennungsmotorentreibstoff und
b) wenigstens eine Verbindung der allgemeinen Formel I

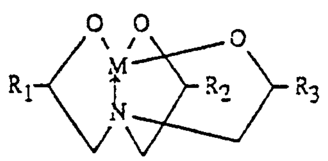

(I),

worin $R_1$ die Bedeutung von $-(CH_2-X)_n-R$ hat, wobei X = -S- oder -O- bedeutet, n = 0 oder 1 ist und R eine Alkylgruppe mit 1 bis 18 C-Atomen, eine Phenylgruppe, eine mit wenigstens einer $C_1$-$C_{18}$-Alkylgruppe substituierte Phenylgruppe, eine Phenyl-$C_1$-$C_4$-Alkylgruppe oder eine mit wenigstens einer $C_1$-$C_4$-Alkylgruppe substituierte Phenyl-$C_1$-$C_4$-Alkylgruppe bedeutet, oder $R_1$ eine Alkylgruppe mit 1 bis 18 C-Atomen, die mit wenigstens einer OH-Gruppe substituiert ist, bedeutet, oder $R_1$ eine Gruppe

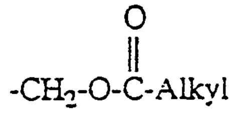

,

wobei die Alkylgruppe 1 bis 18 C-Atome aufweist, bedeutet und $R_2$ und $R_3$ gleich oder verschieden sind und die Bedeutung von -H oder, unabhängig von $R_1$, die gleichen Bedeutungen wie $R_1$ haben, und M die Bedeutungen von B, Al, Fe, Cr, Sb oder Bi, oder M die Bedeutung einer Gruppe M'-R' oder einer Gruppe M'-OR", wobei M' die Bedeutung von Ti, Zr oder Sn hat und R' und R" die Bedeutung von $C_1$-$C_{18}$-Alkyl oder R' die Beutungen von

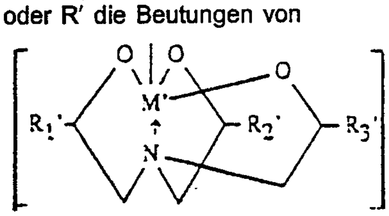

EP 0 437 416 A2

hat, wobei M′ die obige Bedeutung hat und $R_1'$, $R_2'$ und $R_3'$ die Bedeutungen von $R_1$, $R_2$ und $R_3$ haben, oder R″ die Bedeutung von Li, Na oder K oder von

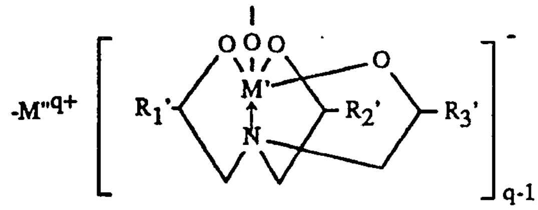

hat, wobei M′ die obige und M″ die Bedeutung von Mg, Ca, B, Al, Fe, Cr, Sb, Bi, Zn, Ti, Ni, Cu oder Pb haben, q die Wertigkeit von M″ bedeutet und $R_1'$, $R_2'$ und $R_3'$ die Bedeutung des jeweiligen $R_1$, $R_2$ und $R_3$ haben, oder M die Bedeutung von -VO hat.

Die Verbindungen der Formel I wirken beispielsweise in Schmierstoffen als Verschleißschutzadditive und Extremdruckadditive sowie als Stabilisatoren für natürliche oder (halb)synthetische Polymere.

# ZUSAMMENSETZUNGEN, ENTHALTEND 2,2',2"-NITRILOTRIETHANOL-CYCLOMETALLATE

Die Erfindung betrifft neue Zusammensetzungen enhaltend 2,2',2"-Nitrilotriethanol-Cyclometallate (Triethanolamin-Cyclometallate), Verbindungen aus der Reihe der 2,2',2"-Nitriloethanol-Cyclometallate, ein neues Verfahren zur Herstellung der Verbindungen und die Verwendungen der Verbindungen.

Aus Chemical Abstracts 91, 1979, 192 800j, wurden Verbindungen der Formel

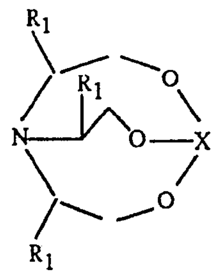

bekannt, worin X = A1, B oder SiMe und $R_1$ = Me oder Cyclohexyl sind, zur Reinigung von $C_4$-Kohlenwasserstofffraktionen aus der Pyrolyse von Petroleum.

Aus der US 3,598,757 sind cyclische Borate als Teil einer Antioxidans-Mischung zur Stabilisierung von Kunstharzen bekannt. Solche cyclischen Borate können die Formel

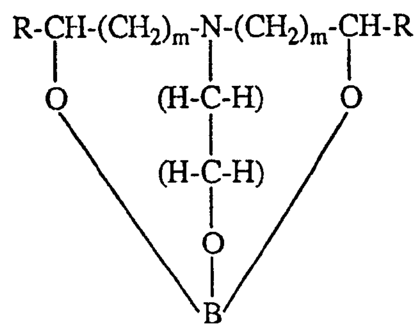

aufweisen, wobei R -H, Alkyl, Alkylen, Aminoalkyl, Dialkylaminoalkyl, Cycloalkylaminoalkyl, Alkoxyalkyl, Hydroxyalkyl, Alkylenoxyalkyl, Aryl oder Aryloxyalkyl, wobei Alkyl oder Alkylen jeweils ein bis vier C-Atome enthalten kann, und m = 1 oder 2 ist.

Die US 3,755,388, US 3,804,875 und die DE-OS 19 08 844 beschreiben Verbindungen der allgemeinen Formel

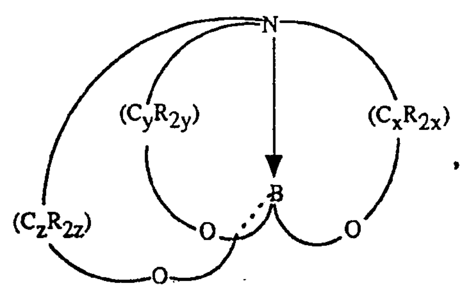

,

worin x, y und z Zahlen von 2 bis 4 sind und R beispielsweise -H, Alkyl, Cycloalkyl, Alkenyl und Cycloalkenyl, Aryl, hydroxylsubstituiertes niedriges Alkyl oder Reste der Formeln $R_nOC-R_m$ oder

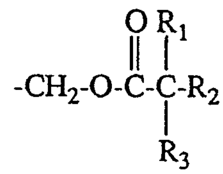

darstellt. Solche Verbindungen stellen Antistatika in polymerischen Fasern und Filmen dar und dienen als Farbverbesserer für Fettsäuredestillationen.

Salze mit Anionen des Typs

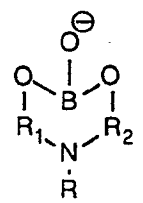

worin R ein anorganischer oder organisher Rest und $R_1$ und $R_2$ organische Reste sind und das Kation organischer oder anorganischer Natur bzw. Wasserstoff sein kann, sind in US-4,892,670 als Hochdruckzusätze für Schmiermittel vorgeschlagen worden.

Es wurden nun neue Zusammensetzungen gefunden, die 2,2′,2″-Nitriloethanol-Cyclometallate enthalten, sowie neue Verwendungen der 2,2′,2″-Nitriloethanol-Cyclometallate.

Erfindungsgemäß enthalten die neuen Zusammensetzungen

a) eine funktionelle Flüssigkeit oder einen Verbrennungsmotorentreibstoff und

b) wenigstens eine Verbindung der allgemeinen Formel I

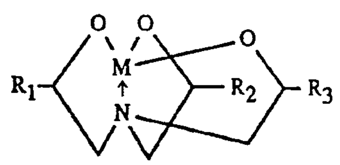

(I),

worin $R_1$ die Bedeutung von $-(CH_2-X)_n-R$ hat, wobei X = -S- oder -O- bedeutet, n = 0 oder 1 ist und R eine Alkylgruppe mit 1 bis 18 C-Atomen, eine Phenylgruppe, eine mit wenigstens einer $C_1$-$C_{18}$-Alkylgruppe substituierte Phenylgruppe, eine Phenyl-$C_1$-$C_4$-Alkylgruppe oder eine mit wenigstens einer $C_1$-$C_4$-Alkylgruppe substituierte Phenyl-$C_1$-$C_4$-Alkylgruppe bedeutet, oder $R_1$ eine Alkylgruppe mit 1 bis 18 C-Atomen, die mit wenigstens einer OH-Gruppe substituiert ist, bedeutet, oder $R_1$ eine Gruppe

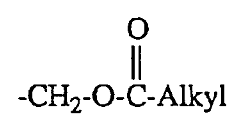

,

wobei die Alkylgruppe 1 bis 18 C-Atome aufweist, bedeutet und $R_2$ und $R_3$ gleich oder verschieden sind und die Bedeutung von -H oder, unabhängig von $R_1$, die gleichen Bedeutungen wie $R_1$ haben, und M die Bedeutung von B, Al, Fe, Cr, Sb oder Bi, oder M die Bedeutung einer Gruppe M′-R′ oder einer Gruppe M′-OR″, wobei M′ die Bedeutung von Ti, Zr oder Sn hat und R′und R″ die Bedeutung von $C_1$-$C_{18}$-Alkyl oder R′ die Bedeutung von

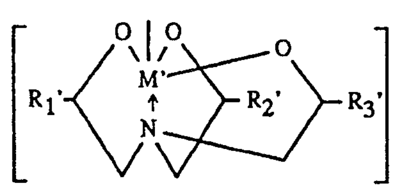

hat, wobei M' die obige Bedeutung hat, und $R_1'$, $R_2'$ und $R_3'$ die Bedeutungen von $R_1$, $R_2$ und $R_3$ haben, oder R" die Bedeutung von Li, Na oder K oder von

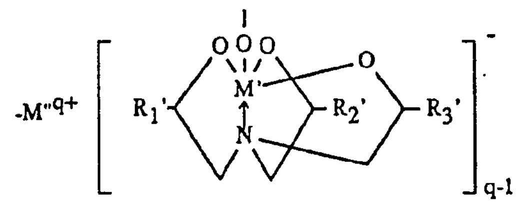

hat, wobei M' die obige und M" die Bedeutung von Mg, Ca, B, Al, Fe, Cr, Sb, Bi, Zn, Ti, Ni, oder Cu haben, q die Wertigkeit von M" bedeutet und $R_1'$, $R_2'$ und $R_3'$ die Bedeutung des jeweiligen $R_1$, $R_2$ und $R_3$ haben, oder M die Bedeutung von -VO hat.

Zweckmäßig sind Zusammensetzungen, enthaltend Verbindungen obengenannter

Formel I, worin M die Bedeutung von >Ti-O-R", >Zr-O-R", >Sn-O-R" oder >Sn-R' hat, wobei R' und R" Alkyl mit 1-18 C-Atomen bedeutet.

Zweckmäßig sind Zusammensetzungen, enthaltend Verbindungen obengenannter Formel I, worin M die Bedeutung von B, Al, Fe, VO oder Ti-O-$C_4$-$C_8$-Alkyl hat.

Andere zweckmäßige Zusammensetzungen enthalten Verbindungen obengenannter Formel I, worin $R_1$ die Bedeutung von -$CH_2$-S-$C_4$-$C_{12}$-Alkyl, von -$CH_2$-O-$C_4$-$C_{12}$-Alkyl, von -$CH_2$-O-CO-$C_4$-$C_{12}$-Alkyl, von

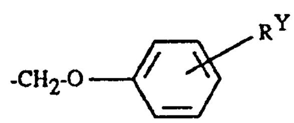
,

wobei $R^Y$ = Alkyl mit 4 bis 18 C-Atomen ist, oder von

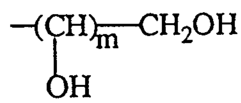

hat, wobei m = 1,2 oder 3 ist, und $R_2$ und $R_3$, unabhängig voneinander, die Bedeutung von -H oder $R_1$ haben.

Bevorzugte Zusammensetzungen enthalten Verbindungen obengenannter Formel I, worin $R_1$ die oben genannte Bedeutung hat und $R_2$ und $R_3$ Wasserstoff bedeuten oder worin $R_1$ und $R_2$, mit Ausnahme von Wasserstoff, die oben genannten Bedeutungen haben und $R_3$ Wasserstoff ist.

Besonders bevorzugt sind Zusammensetzungen, enthaltend Verbindungen obengenannter Formel I, worin $R_1$ die Bedeutung von -$CH_2$-S-$C_4$-$C_{12}$-Alkyl, von -$CH_2$-O-CO-$C_8$-$C_{12}$-Alkyl und $R^2$ und $R^3$ die Bedeutung von -H haben.

Andere besonders bevorzugte Zusammensetzungen enthalten Verbindungen obengenannter Formel I sind solche, worin $R_1$ und $R_2$ die Bedeutung von -$CH_2$-S-$C_4$-$C_{12}$-Alkyl haben und $R_3$ -H bedeutet.

Zu den bevorzugten Zusammensetzungen sind auch solche zu zählen, enthaltend Verbindungen der Formel I, in denen $R_1$ die Bedeutung einer Alkylgruppe mit 1 bis 18 C-Atomen, die mit wenigstens einer OH-Gruppe substituiert ist und $R_2$ und $R_3$ die obengenannte Bedeutung $-(CH_2-X)_n-R$ haben, wobei für X = -S- wiederum besonders bevorzugt ist.

Bedeutet R, R' oder R" eine Alkylgruppe mit 1 bis 18 C-Atomen, so sind Beispiele dafür Methyl, Ethyl, Propyl, Isopropyl, n-Butyl, Isobutyl, t-Butyl, Pentyl, Isopentyl, Hexyl, Heptyl, 3-Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl, 1,1,3,3-Tetramethylhexyl oder 1-Methylundecyl.

Zweckmäßig für R, R'und R" ist $C_4$ bis $C_{12}$-Alkyl, vorzugsweise ist R, R'und R" $C_4$ bis $C_9$-Alkyl.

Bevorzugt für R, R'und R" sind beispielsweise t-Butyl, 2-Ethylhexyl, t-Nonyl, n-Decyl und t-Dodecyl. Unter t-Nonyl wird 1,1,3,3-Tetramethylpentyl und unter t-Dodecyl das 1,1,3,3-Tetramethyloctyl verstanden. Besonders bevorzugt für R'und R" ist n-Butyl.

Bedeutet R eine Phenyl-$C_1$-$C_4$-Alkylgruppe, so sind Beispiele dafür Benzyl oder Phenethyl. Der Phenylrest kann mit wenigstens einer $C_1$-$C_4$-Alkylgruppe substituiert sein, wobei eine oder zwei $C_1$-$C_4$-Alkylgruppen zweckmäßig und eine $C_1$- oder $C_2$-Alkylgruppe bevorzugt sind.

Bedeutet $R_1$, $R_2$ oder $R_3$ eine Alkylgruppe mit 1 bis 18 C-Atomen, die mit wenigstens einer OH-Gruppe substituiert ist, so handelt es sich beispielsweise um Gruppen der Formel

$$-(CH_2)_i-(\underset{OH}{\underset{|}{CH}})_k-(CH_2)_l-(\underset{OH}{\underset{|}{CH}})_o-(CH_2)_p-CH_2OH,$$

wobei i, k, l, o und p je eine Zahl von 0 bis 17 ist und i+k+l+o+p zusammen nicht mehr als 17 betragen. Sinngemäß sind auch verzweigte C-Ketten mitumfaßt.

Bevorzugt ist eine Gruppe der Formel

$$-(\underset{OH}{\underset{|}{CH}})_k-CH_2OH,$$

wobei k eine Zahl von 1,2 oder 3 ist. 3 ist dabei bevorzugt.

Demnach sind bevorzugt :

$$-\underset{OH}{\underset{|}{CH}}-\underset{OH}{\underset{|}{CH_2}} \text{ und } -\underset{OH}{\underset{|}{CH}}-\underset{OH}{\underset{|}{CH}}-\underset{OH}{\underset{|}{CH}}-\underset{OH}{\underset{|}{CH_2}}.$$

Bedeuten $R_1$, $R_2$ oder $R_3$

$$-CH_2-O-\overset{O}{\overset{\|}{C}}-Alkyl,$$

so kann die Alkylgruppe 1 bis 18 C-Atome, zweckmäßig 4-12 C-Atome und vorzugsweise 4-9 C-Atome, aufweisen. Beispiele für Alkylgruppen sind obiger Aufzählung zu entnehmen.

Besonders bevorzugt für $R_1$ als

$$-CH_2-O-\overset{O}{\overset{\|}{C}}-Alkyl \text{ ist beispielsweise } -CH_2-O-\overset{O}{\overset{\|}{C}}-t-C_4H_9,$$

$$-CH_2-O-\overset{O}{\overset{\|}{C}}-n-C_4H_9, \quad -CH_2-O-\overset{O}{\overset{\|}{C}}-n-C_8H_{17}, \quad -CH_2-O-\overset{O}{\overset{\|}{C}}-2\text{-}Ethylhexyl,$$

$$-CH_2-O-\overset{O}{\overset{\|}{C}}-t-C_9H_{19} \text{ und } -CH_2-O-\overset{O}{\overset{\|}{C}}-n-C_9H_{19}.$$

Bedeutet R eine Phenylgruppe, die mit wenigstens einer Alkylgruppe mit 1 bis 18 C-Atomen substituiert ist, so sind Beispiele für die Alkylgruppen obiger Aufzählung zu entnehmen.

Zweckmäßig bedeutet R eine Phenylgruppe, substituiert mit 1, 2 oder 3 Alkylgruppen mit 1 bis 12 C-Atomen. Vorzugsweise bedeutet R eine Phenylgruppe substituiert mit einer $C_1$-$C_{12}$-Alkylgruppe.

Bevorzugt sind Gruppen, wie

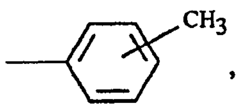 , 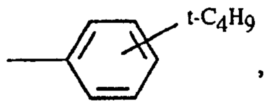 , 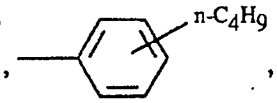 , 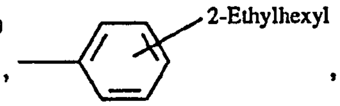 ,

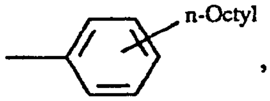 , 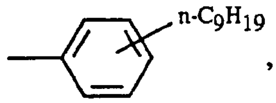 , 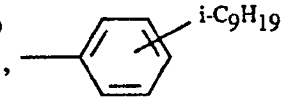 , 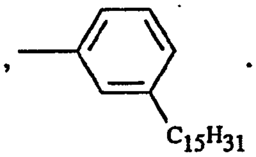 .

Beispiele bevorzugter Zusammensetzungen sind solche, die Verbindungen nachstehender Auflistung enthalten :

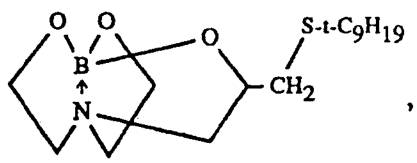 , 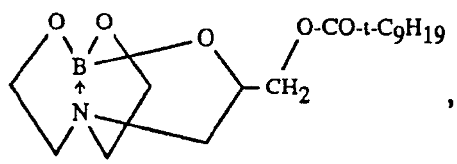 ,

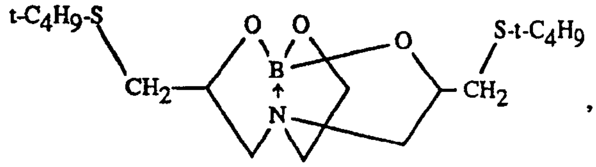 , 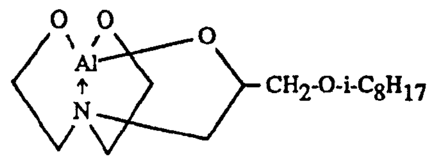 ,

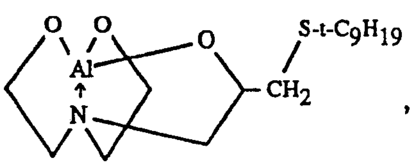 , 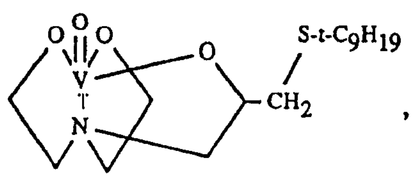 ,

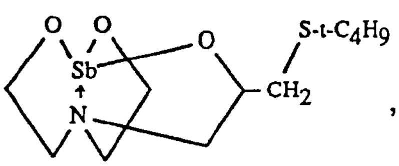 , 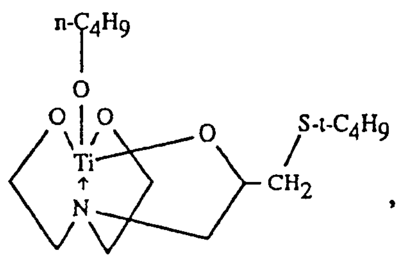 ,

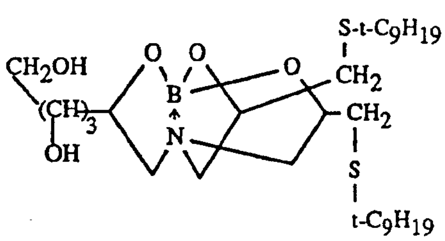 und 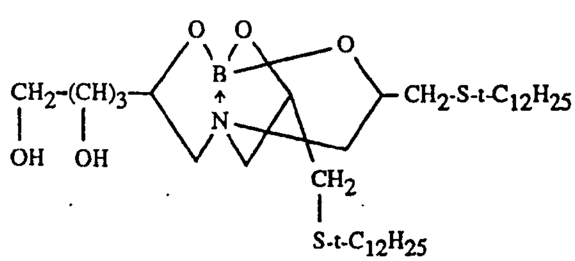 .

Beispiele besonders bevorzugter Verbindungen sind :

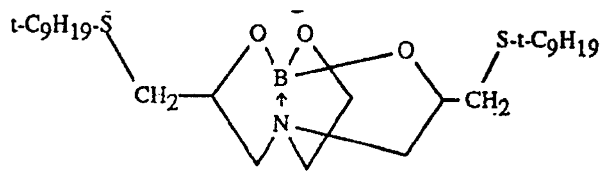

und

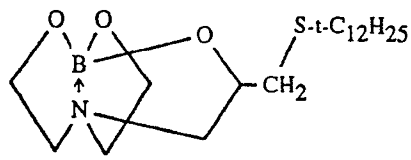

Eine weitere Gruppe von Verbindungen der Formel I, die in Zusammensetzungen nach vorliegender Erfindung von großem Interesse ist, hat die allgemeine Formel I mit

M = M'-OR", wobei R" = M" ist,

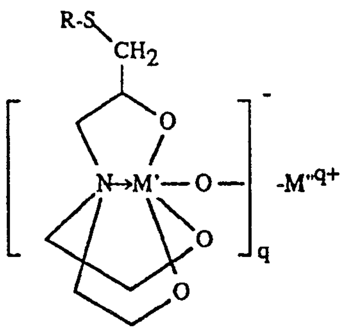

,

wobei q, R und M' die oben angegebenen Bedeutungen haben und M" insbesondere B, Al, Fe, Cr, Sb, Bi, Zn, Ti oder Cu und besonders bevorzugt Ti, B, Al, Fe oder Zn und q die Wertigkeit von M" bedeuten.

Ein Beispiel einer Verbindung letztgenannter Art ist

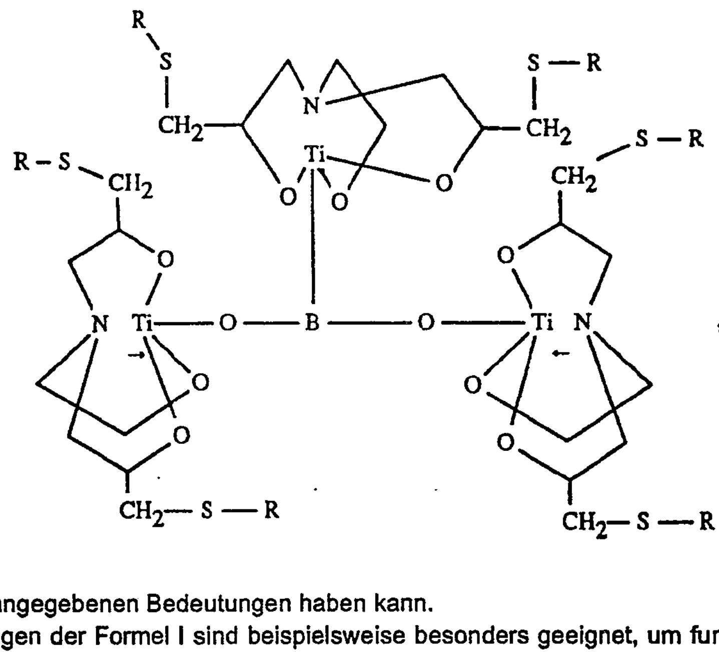

,

wobei R eine der angegebenen Bedeutungen haben kann.

Die Verbindungen der Formel I sind beispielsweise besonders geeignet, um funktionellen Flüssigkeiten verbesserte Gebrauchseigenschaften zu verleihen. Es ist beispielsweise aus der US 4,557,843 bekannt, daß borhaltige heterocyclische Verbindungen in Schmierstoffen eine Verbesserung der Extremdruck- und Verschleißschutzeigenschaften bewirken. Es wurde nun gefunden, daß die vorstehend genannten Verbindungen der Formel I in überraschender Weise funktionellen Flüssigkeiten verbesserte Eigenschaften verleihen. Deshalb umfaßt die Erfindung auch Zusammensetzungen, enthaltend eine funktionelle Flüssigkeit und wenigstens eine Verbindung der allgemeinen Formel I, wie oben beschrieben.

Als funktionelle Flüssigkeiten sind beispielsweise Schmierstoffe, Hydraulikflüssigkeiten und Metallbearbeitungsflüssigkeiten zu nennen.

Die in Frage kommenden Schmierstoffe basieren beispielsweise auf mineralischen oder synthetischen Oelen oder Mischungen davon oder auf pflanzlichen und tierischen Oelen, Fetten und Wachsen. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Die Schmierstoffe sind insbesondere Oele. Fette, beispielsweise basierend auf einem Mineralöl, sind aber ebenfalls mitumfaßt.

Die Mineralöle basieren insbesondere auf Kohlenwasserstoffverbindungen.

Beispiele von synthetischen Schmierstoffen umfassen Schmierstoffe auf der Basis der aliphatischen oder aromatischen Carboxylester, der polymeren Ester, der Polyalkylenoxide, der Phosphorsäureester, der Poly-α-olefine oder der Silicone, eines Diesters einer zweiwertigen Säure mit einem einwertigen Alkohol, wie z.B. Dioctylsebacat oder Dinonyladipat, eines Triesters von Trimethylolpropan mit einer einwertigen Säure oder mit einem Gemisch solcher Säuren, wie z.B. Trimethylolpropantripelargonat, Trimethylolpropan-tricaprylat oder Gemische davon, eines Tetraesters von Pentaerythrit mit einer einwertigen Säure oder mit einem Gemisch solcher Säuren, wie z.B. Pentaerythrit-tetracaprylat, oder eines komplexen Esters von einwertigen und zweiwertigen Säuren mit mehrwertigen Alkoholen, z.B. ein komplexer Ester von Trimethylolpropan mit Capryl- und Sebacinsäure oder von einem Gemisch davon. Besonders geeignet sind neben Mineralölen z.B. Poly-α-Olefine, Schmierstoffe auf Esterbasis, Phosphate, Glykole, Polyglykole und Polyalkylenglykole, sowie deren Mischungen mit Wasser.

Als pflanzliche Schmierstoffe sind die Oele, Fette und Wachse, gewonnen beispielsweise aus Oliven, Palmen, Palmkernen, Rüben, Raps, Leinen, Nüssen, Soja, Baumwolle, Ricinus, Sonnenblumen, Kürbiskernen, Kokos, Mais oder deren modifizierte Formen, z.B. geschwefelte oder epoxidierte Oele, wie epoxidiertes Sojaöl, sowie Mischungen der Substanzen zu nennen. Beispiele für tierische Oele, Fette und Wachse, die als Schmierstoffe angewendet werden können, sind Talge, Fischöle, Spermöl, Klauenöl, Trane und Specköle, deren modifizierte Formen und Mischungen.

Die Verbindungen der Formel I, wie oben beschrieben, können z.B. in Mengen von 0,01 bis 10 Gew.-%, zweckmäßig in Mengen von 0,03 bis 5 Gew.-%, vorzugsweise in einer Menge von 0,05 bis 3 Gew.-% und ganz besonders bevorzugt von 0,5 bis 1,5 Gew.-%, bezogen auf die Zusammensetzung, in der Zusammensetzung vorliegen.

Die Verbindungen der Formel I können der funktionellen Flüssigkeit auf an sich bekannte Weise beigemischt werden. Die Verbindungen sind beisipelsweise in Oelen gut löslich. Es ist auch möglich, einen sogenannten Masterbatch herzustellen, der nach Maßgabe des Verbrauchs auf Einsatzkonzentrationen mit der entsprechenden funktionellen Flüssigkeit verdünnt werden kann.

Die funktionellen Flüssigkeiten und insbesondere die Schmierstoffe können zusätzlich andere Additive enthalten, die zugegeben werden, um die Grundeigenschaften derselben noch weiter zu verbessern. Dazu gehören Antioxidantien, Metalldesaktivatoren, Rostinhibitoren, Viskositätsindex-Verbesserer, Stockpunkterniedriger, Dispergiermittel, Detergentien und weitere Verschleißschutz-Additive. Beispiele hierfür sind :

Beispiele für phenolische Antioxidantien

1. Alkylierte Monophenole

2,6-Di-tert-butyl-4-methylphenol, 2,6-Di-tert-butylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, o-tert-Butylphenol.

2. Alkylierte Hydrochinone

2,6-Di-tert-butyl-4-methoxyphenol, 2,5-Di-tert-butyl-hydrochinon, 2,5-Di-tert-amylhydrochinon, 2,6-Diphenyl-4-octadecyloxyphenol.

3. Hydroxylierte Thiodiphenylether

2,2′-Thio-bis-(6-tert-butyl-4-methylphenol), 2,2′-Thio-bis-(4-octylphenol), 4,4′-Thio-bis-(6-tert-butyl-3-methylphenol), 4,4′-Thio-bis-(6-tert-butyl-2-methylphenol).

4. Alkyliden-Bisphenole

2,2′-Methylen-bis-(6-tert-butyl-4-methylphenol), 2,2′-Methylen-bis-(6-tert-butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert-butylphenol), 2,2′-Ethyliden-bis-(4,6-di-tert-butylphenol), 2,2′-Ethyliden-bis-(6-tert-butyl-4- oder -5-iso-butylphenol), 2,2′-Methylen-bis-(6-(α-methylbenzyl)-4-nonylphenol], 2,2′-Methylen-bis-[6-(α,α-dimethylbenzyl)-4-nonylphenol], 4,4′-Methylen-bis-(2,6-di-tert-butylphenol), 4,4′-Methylen-bis-(6-tert-butyl-2-methylphenol), 1,1-Bis-(5-tert-butyl-4-hydroxy-2-methylphenyl)-butan, 2,6-Di-(3-tert-butyl-5-methyl-2-hydroxybenzyl)-4-methylphenol, 1,1,3-Tris-(5-tert-butyl-4-hydroxy-2-methylphenyl)-3-n-dodecylmercaptobutan, Ethylenglycol-bis-[3,3-bis-(3′-tert-butyl-4′-hydroxyphenyl)-butyrat], Bis-(3-tert-butyl-4-hydroxy-5-methylphenyl)-dicyclopentadien, Bis-[2-(3′-tert-butyl-2′-hydroxy-5′-methyl-benzyl)-6-tert-butyl-4-methyl-phenyl]- terephthalat.

5. Benzylverbindungen

1,3,5-Tri-(3,5-di-tert-butyl-4-hydroxybenzyl)-2,4,6-trimethylbenzol, Bis-(3,5-di-tert-butyl-4-hydroxybenzyl)-sulfid, 3,5-Di-tert-butyl-4-hydroxybenzyl-mercaptoessigsäureisooctylester, Bis-(4-tert-butyl-3-hydroxy-2,6-dimethylbenzyl)-dithiol-terephthalat, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 3,5-Di-tert-butyl-4-hydroxybenzyl-phosphonsäure-di-octadecylester, 3,5-Di-tert-butyl-4-hydroxybenzyl-phosphonsäure-monoethylester, Calcium-salz.

6. Acylaminophenole

4-Hydroxy-laurinsäureanilid, 4-Hydroxy-stearinsäureanilid, 2,4-Bis-octylmercapto-6-(3,5-di-tert-butyl-4-hydroxyanilino)-s-triazin, N-(3,5-di-tert-butyl-4-hydroxyphenyl)-carbaminsäureoctylester.

7. Ester der β-(3,5-Di-tert-butyl-4-hydroxyphenyl)-propionsäure

mit ein- oder mehrwertigen Alkoholen, wie z.B. mit Methanol, Diethylenglycol, Octadecanol, Triethylenglycol, 1,6-Hexandiol, Pentaerythrit, Neopentylglycol, Tris-hydroxyethyl-isocyanurat, Thiodiethylenglycol, Bis-hydroxyethyloxalsäurediamid.

8. Ester der β-(5-tert-butyl-4-hydroxy-3-methylphenyl)-propionsäure

mit ein- oder mehrwertigen Alkoholen, wie z.B. mit
Methanol, Diethylenglycol, Octadecanol, Triethylenglycol, 1,6-Hexandiol, Pentaerythrit, Neopentylglycol, Tris-hydroxyethyl-isocyanurat, Thiodiethylenglykol, Di-hydroxyethyloxalsäurediamid.

9. Amide der β-(3,5-Di-tert-butyl-4-hydroxyphenyl)-propionsäure,

wie z.B. N,N′-Bis-(3,5-di-tert-butyl-4-hydroxyphenylpropionyl)-hexamethylendiamin, N,N′-Bis-(3,5-di-tert-butyl-4-hydroxyphenylpropionyl)-trimethylendiamin, N,N′-Bis-(3,5-di-tert-butyl-4-hydroxyphenylpropionyl)-hydrazin.

Beispiele für aminische Antioxidantien :

N,N′-Di-isopropyl-p-phenylendiamin, N,N′-Di-sec-butyl-p-phenylendiamin, N,N′-Bis-(1,4-dimethyl-pentyl)-p-phenylendiamin, N,N′-Bis(1-ethyl-3-methyl-pentyl)-p-phenylendiamin, N,N′-Bis(1-methyl-heptyl)-p-phenylendiamin, N,N′-Dicyclohexyl-p-phenylendiamin, N,N′-Diphenyl-p-phenylendiamin, N,N′-Di-(naphthyl-2)-p-phenylendiamin, N-Isopropyl-N′-phenyl-p-phenylendiamin, N-(1,3-Dimethyl-butyl)-N′-phenyl-p-phenylendiamin, N-(1-Methyl-heptyl)-N′-phenyl-p-phenylendiamin, N-Cyclohexyl-N′-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxyphenyl)-amin, 2,6-Di-tert-butyl-4-dimethylamino-methylphenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl] amin, tert-octyliertes N-Phenyl-1-naphthylamin, Gemisch aus mono- und dialkylierten tert-Butyl/tert-Octyldiphenylaminen, 2,3-Dihydro-3,3-dimethyl-4H- 1,4-benzothiazin, Phenothiazin, N-Allylphenothiazin.

Beispiele für weitere Antioxidantien :

Aliphatische oder aromatische Phosphite, Ester der Thiodipropionsäure oder der Thiodiessigsäure, oder Salze der Dithiocarbamid- oder Dithiophosphorsäure.

Beispiele für Metall-Desaktivatoren, z.B. für Kupfer, sind :

Triazole, Benztriazole und deren Derivate, Tolutriazole und deren Derivate, 2-Mercaptobenzthiazol, 2-Mercaptobenztriazol, 2,5-Dimercaptobenztriazol, 2,5-Dimercaptobenzthiadiazol, 5,5'-Methylenbisbenztriazol, 4,5,6,7-Tetrahydrobenztriazol, Salicyliden-propylendiamin, Salicylaminoguanidin und dessen Salze.

Beispiele für Rost-Inhibitoren sind :

a) Organische Säuren, ihre Ester, Metallsalze und Anhydride, z.B. :
N-Oleoyl-sarcosin, Sorbitan-mono-oleat, Blei-naphthenat, Alkenylbernsteinsäureanhydrid, z.B. Dodecenylbernsteinsäure-anhydrid, Alkenylbernsteinsäure-Teilester und -Teilamide, 4-Nonylphenoxy-essigsäure.
b) Stickstoffhaltige Verbindungen, z.B. :
I. Primäre, sekundäre oder tertiäre aliphatische oder cycloaliphatische Amine und Amin-Salze von organischen und anorganischen Säuren, z.B. öllösliche Alkylammoniumcarboxylate.
II. Heterocyclische Verbindungen, z.B. :
Substituierte Imidazoline und Oxazoline.
c) Phosphorhaltige Verbindungen, z.B. :
Aminsalze von Phosphorsäurepartialestern oder Phosphonsaürepartialestern, Zinkdialkyldithiophosphate.
d) Schwefelhaltige Verbindungen, z.B. :
Barium-dinonylnaphthalin-sulfonate, Calciumpetroleum-sulfonate.

Beispiele für Viskositätsindex-Verbesserer sind :

Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.

Beispiele für Stockpunkterniedriger sind :

Polymethacrylat, alkylierte Naphthalinderivate.

Beispiele für Dispergiermittel/Tenside sind :

Polybutenylbernsteinsäueamide oder -imide, Polybutenylphosphonsäurederivate, basische Magnesium-, Calcium-, und Bariumsulfonate und -phenolate.

Beispiele für Verschleißschutz-Additive sind :

Schwefel und/oder Phosphor und/oder Halogen enthaltende Verbindungen, wie geschwefelte pflanzliche Oele, Zinkdialkyldithiophosphate, Tritolylphosphat, chlorierte Paraffine, Alkyl- und Aryldi- und tri-sulfide, Triphenylphosphorothionate, Diethanolaminomethyltolyltriazol, Di(2-ethylhexyl)aminomethyltolyltriazol.

Die vorliegende Erfindung umfaßt auch die Verwendung von Verbindungen der allgemeinen Formel I, wie oben beschrieben, als Verschleißschutzadditive und Extremduck-additive in funktionellen Flüssigkeiten, wie

oben erwähnt.

Die vorliegende Erfindung umfaßt auch Zusammensetzungen, enthaltend einen Verbrennungsmotorentreibstoff und wenigstens eine Verbindung der Formel I, wie vorstehend beschrieben.

Als Verbrennungsmotorentreibstoffe sind beispielsweise die Treibstoffe für Gasturbinen und für Hub- und Rotationskolbenmaschinen mit Eigen- oder Fremdzündung (nach dem Diesel- oder Ottoprinzip) umfaßt. Es handelt sich bei den Treibstoffen demnach um gasförmige oder insbesondere flüssige kohlenwasserstoffhaltige Verbindungen und Gemische daraus, beispielsweise aus der Reihe von Methan, Ethan, Propan, Butan und insbesondere höhere Kohlenwasserstoff-Verbindungen, beispielsweise der Octan-Reihe, Kerosen und dergl. und Gemische daraus, wie sie als Motorenbenzine und Dieselöle (Dieseltreibstoffe) bekannt sind, ferner um Alkohole, wie Methanol oder Ethanol, oder beispielsweise um pflanzliche Oele, wie beispielsweise Sonnenblumen- oder Rapsöl. Bevorzugt wird Dieseltreibstoff.

Zweckmäßige und bevorzugte Verbindungen der Formel I, wie vorstehend beschrieben führen zu zweckmäßigen und bevorzugten Zusammensetzungen.

Die Verbindungen der Formel I werden der Zusammensetzung, enthaltend den Verbrennungsmotorentreibstoff, beispielsweise in Mengen von 0,00001 bis 1 Gew.-%, zweckmäßig von 0,00001 bis 0,1 Gew.-%, vorzugsweise von 0,0001 bis 0,1 Gew.-% und insbesondere von 0,0001 bis 0,01 Gew.-%, bezogen auf die Zusammensetzung, zugegeben.

Es ist beispielsweise möglich, mittels eines Lösungsmittels, z.B. einer höheren Kohlenwasserstofffraktion, wie Petroleum, oder aus dem Verbrennungsmotorentreibstoff, vorzugsweise dem Dieseltreibstoff, z.B. eine 1 bis 50 Gew.-% Lösung an Verbindung der Formel I herzustellen und diese konzentrierte Lösung beim Betrieb des Verbrennungsmotors dosiert einem Hauptstrom des dem Motor zugespiesenen Treibstoffes derart zuzumischen, daß Zusammensetzungen aus dem Verbrennungsmotorentreibstoff und Verbindungen der Formel I, in Konzentrationen, wie oben beschrieben, entstehen. Diese Zusammensetzungen stellen dann den im Motor zu verbrennenden Treibstoff dar. Diese konzentrierte Lösung kann aber auch dem Treibstoff unmittelbar zugefügt werden um auf diese Weise die Dosierung zu erleichtern.

Derartige Treibstoffe führen zu einem verbesserten Verbrennungsablauf und zu Abgasen, welche weniger Schadstoffe enthalten. Beispielsweise kann bei Motoren, die nach dem Dieselprinzip arbeiten, der Ruß- und Stickoxidausstoß in den Abgasen reduziert werden.

Die vorliegende Erfindung umfaßt auch die Verwendung der Verbindungen der Formel I gemäß Anspruch 1 als Additive in Verbrennungsmotorentreibstoffen.

Die Verbindungen der Formel I können auch als Stabilisatoren, z.B. Verarbeitungsstabilisatoren, in thermischem, oxidativem oder aktinischem Abbau unterworfenen natürlichen, halbsynthetischen oder synthetischen organischen Materialien, insbesondere in thermoplastischen Kunststoffen eingesetzt werden. Beispiele für solche Kunststoffe sind der folgenden Aufzählung von geeigneten Materialien zu entnehmen.

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen ; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen ; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-($\alpha$-methylstyrol).

5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat ; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren ; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder a-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien ; Styrol, Acrylnitril und Methylmethacrylat auf Polybutadien ; Styrol und Maleinsäureanhydrid auf Polybutadien ; Styrol, Acrylnitril und Maleinsäureanhydrid oder Maleinsäureimid auf Polybutadien ; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid ; sowie deren Copolymere, wie Vinylchlorid-Vinylidenchlorid, Vinylchlorid-Vinylacetat oder Vinylidenchlorid-Vinylacetat.

8. Polymere, die sich von α,ß-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin ; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten ; Polyacetale, die mit thermoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure ; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren ; oder mit Polyethern, wie z.B. mit Polyethylenglykol, Polypropylenglykol oder Polytetramethylenglykol. Ferner mit EPDM oder ABS modifizierte Polyamide oder Copolyamide ; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten ; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren

halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose ; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wäßrige Emulsionen.

29. Wäßrige Emulsionen natürlicher oder synthetischer Kautschuke, wie z.B. Naturkautschuk-Latex oder Latices von carboxylierten Styrol-Butadien-Copolymeren.

Die erfindungsgemäßen Verbindungen der Formel I sind durch ein neues Verfahren erhältlich, das gekennzeichnet ist dadurch, daß man eine Verbindung der Formel II,

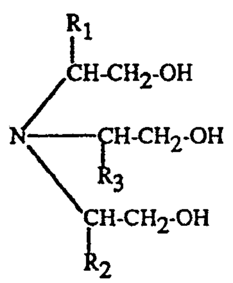

(II),

worin $R_1$, $R_2$ und $R_3$ die oben angegebenen Bedeutungen haben, mit einer Verbindung der Formel III

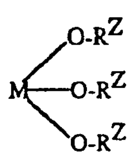

(III),

wobei $R^z$ -H oder $C_1$-$C_8$-Alkyl bedeutet, und M die oben angegebene Bedeutung hat, umsetzt.

Beispiele für $R^Z$ als $C_1$-$C_8$-Alkyl sind Methyl, Ethyl, n-Propyl, i-Propyl, n-Butyl, t-Butyl, n-Pentyl, n-Hexyl oder n-Octyl, bevorzugt für $R^Z$ ist -H, Methyl, Ethyl oder i-Propyl.

Zweckmäßig sind jeweils alle Substituenten $R^Z$ gleich.

Die Verbindungen der Formel II sind beispielsweise bekannt aus der EP-A 0 233 140. Die Verbindungen der Formel III sind bekannt, können nach bekannten Verfahren hergestellt werden bzw. sind Handelsprodukte, wie z.B. Borsäure oder Borsäuretriethylester.

Das Verfahren kann derart ausgeführt werden, daß die Verbindungen der Formel II und III in equimolarem Verhältnis oder in einem Ueberschuß der einen oder anderen Komponente bis zu 10 Gew.-% vorgelegt werden. Es kann ein Lösungsmittel angewendet werden. Es kann auch ohne Lösungsmittel gearbeitet werden, beispielsweise wenn die Reaktanden ineinander löslich sind oder durch schmelzen ineinander gelöst werden. Als Lösungsmittel können alle gegenüber den Reaktanden inerten Lösungsmittel, beispielsweise Cyclohexan, Toluol, Ethanol, oder Mischungen davon, angewendet werden.

Das Reaktionsgemisch wird in der Regel unter Rühren bei Temperaturen zwischen Raumtemperatur und Rückflußtemperatur gehalten. Zweckmäßig wird die Reaktion bei Rückflußtemperatur durchgeführt. Reaktionstemperaturen von höher als 150°C sind im allgemeinen nicht notwendig, so daß das Verfahren auch vor Erreichen der Rückflußtemperatur, insbesondere sofern diese höher als z.B. 120°C und insbesondere 150°C liegen sollte, ausgeführt werden kann.

Die Reaktionsdauer ist unkritisch und kann beispielsweise zwischen 15 Minuten bis 2 Stunden betragen.

Das Endprodukt kann auf an sich bekannte Weisen gewonnen und gegebenenfalls gereinigt werden.

Ein Teil der Verbindungen der Formel I sind neu.

Deshalb umfaßt vorliegende Erfindung auch Verbindungen der allgemein Formel I

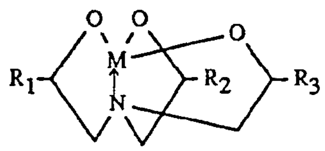 ,

worin M die Bedeutung von B hat und worin $R_1$ die Bedeutung von $-CH_2-S-R$ hat, wobei R eine Alkylgruppe mit 1 bis 18 C-Atomen, eine Phenylgruppe, eine mit wenigstens einer $C_1$-$C_{18}$-Alkylgruppe substituierte Phenylgruppe, eine Phenyl-$C_1$-$C_4$-Alkylgruppe oder eine mit wenigstens einer $C_1$-$C_4$-Alkylgruppe substituierte Phenyl-$C_1$-$C_4$-Alkylgruppe bedeutet und $R_2$ und $R_3$, unabhängig voneinander, die Bedeutung von -H oder, unabhängig von $R_1$, die gleichen Bedeutungen wie $R_1$ haben, oder Verbindungen der Formel I, worin M die Bedeutung von Al, Fe, Cr, Sb, Bi oder VO hat und worin $R_1$ die Bedeutung von $-(CH_2-X)_n-R$ hat, wobei X = -S- oder -O- bedeutet, n = 0 oder 1 ist und R eine Alkylgruppe mit 1 bis 18 C-Atomen, eine Phenylgruppe oder eine mit wenigstens einer $C_1$-$C_{18}$-Alkylgruppe substituierte Phenylgruppe, eine Phenyl-$C_1$-$C_4$-Alkylgruppe oder eine mit wenigstens einer $C_1$-$C_4$-Alkylgruppe substituierte Phenyl-$C_1$-$C_4$-Alkylgruppe bedeutet, oder $R_1$ eine Alkylgruppe mit 1 bis 18 C-Atomen, die mit wenigstens einer OH-Gruppe substituiert ist, bedeutet, oder $R_1$ eine Gruppe

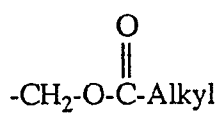 ,

wobei die Alkylgruppe 1 bis 18 C-Atome aufweist, bedeutet und $R_2$ und $R_3$ gleich oder verschieden sind und die Bedeutung von -H oder, unabhängig von $R_1$, die gleichen Bedeutungen wie $R_1$ haben, oder Verbindungen der Formel I, worin M die Bedeutung einer Gruppe M'-R' oder einer Gruppe M'-OR'', wobei M' die Bedeutung von Ti, Zr oder Sn hat und R'und R'' die Bedeutung von $C_1$-$C_{18}$-Alkyl oder R'die Bedeutung von

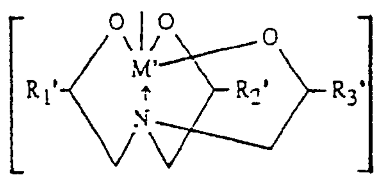

hat, wobei M' die obige Bedeutung hat und $R_1'$, $R_2'$ und $R_3'$ die Bedeutungen von $R_1$, $R_2$ und $R_3$, wie oben angegeben, haben, oder R'' die Bedeutunb von Li, Na oder K oder von

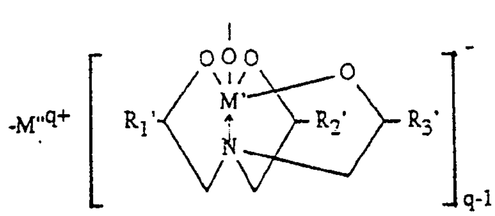

hat, wobei M'die obige und M'' die Bedeutung von Mg, Ca, B, Al, Fe, Cr, Sb, Bi, Zn, Ti, Ni, Cu oder Pb haben, q die Wertigkeit von M'' bedeutet und $R_1'$, $R_2'$ und $R_3'$ die Bedeutung des jeweiligen $R_1$, $R_2$ und $R_3$ haben.

Bevorzugt sind Verbindungen der Formel I, worin $R_1$ die Bedeutung von $-CH_2-S-R$ hat, wobei R eine Alkylgruppe mit 1 bis 18 C-Atomen bedeutet und $R_2$ und $R_3$ unabhängig voneinander, die Bedeutung von -H oder mit bis zu 6 Hydroxygruppppen substituiertem $C_1$-$C_{12}$- Alkyl oder, unabhängig von $R_1$, die gleichen

Bedeutung wie $R_1$ haben.

Die nachfolgenden Beispiele illustrieren vorliegende Erfindung weiter.

Alle Angaben in Teilen oder Prozenten bezeihen sich auf das Gewicht, sofern nicht anders angegeben.

Beispiel 1 : In einem 0,513-Halskolben mit Wasserabscheider, Rückflußkühler, KPG-Rührer und Thermometer werden 32,1 g der Verbindung $t\text{-}C_3H_{19}\text{-}S\text{-}CH_2\text{-}CH(OH)\text{-}CH_2\text{-}N(\text{-}CH_2\text{-}CH_2\text{-}OH)_2$, 6,2 g Borsäure und 150 ml Cyclohexan vorgelegt. Das Gemisch wird dann unter Rühren am Rückfluß erwärmt und das Reaktionswasser (4,5 ml, ber. 5,4 ml) entfernt. Nach dem Abkühlen auf 20°C werden die ausgefallenen Kristalle abgesaugt, mit Cyclohexan gewaschen und getrocknet.

Es wird die Verbindung

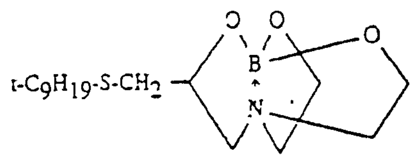

erhalten.

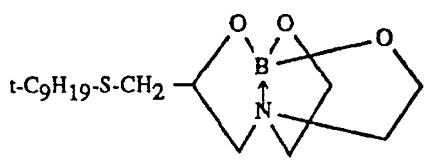

erhalten.

Ausbeute : 22,4 g = 68 % der Theorie, weiße Kristalle mit einem Smp. 93°C.

Analog dem in Beispiel 1 beschriebenen Verfahren werden weitere Verbindungen hergestellt, die in Tabelle I zusammengestellt sind.

Tab elle I:

| Beispiel | Formel | Analyt. Daten | Bemerkungen |
|---|---|---|---|
| 2 | 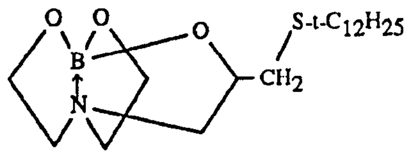 | Smp. 83°C | Aus $Et_2O$ umkristallisiert |
| 3 | 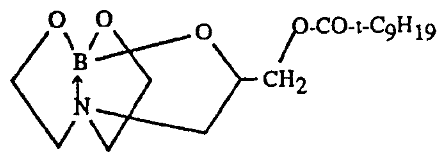 | wachsartige Masse | |
| 4 | 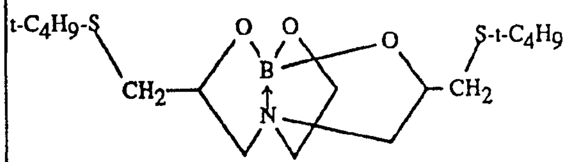 | Smp. 180°C | |
| 5 | 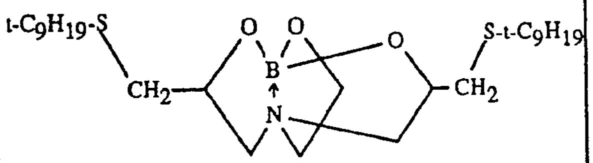 | $n_D^{40}$: 1,4985 | |
| 6 | 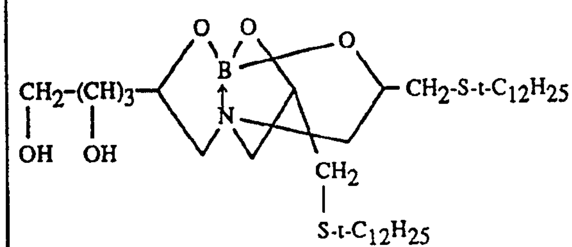 | Harz | |

<u>Beispiel 7</u> : 32,1 g der Verbindung t-$C_9H_{19}$-S-$CH_2$-CH(OH)-$CH_2$-N(-$CH_2$-$CH_2$-OH)$_2$ und 20,4 g Aluminium-tri-i-propylat werden in einem 100 ml 2-Halskolben mit Magnetrührer, Destillationsbrücke, Thermometer und Vorlage auf 150°C unter $N_2$ erwärmt. Hierbei werden 13,0 g $^i$Propanol abdestilliert, der restliche Alkohol wird anschließend unter vermindertem Druck entfernt.

Rückstand : 35,6 g (ber. 34,6 g) einer harzartigen Substanz, die der Formel entspricht

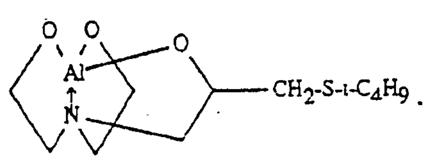

<u>Beispiel 8</u> : Ein Gemisch aus 25,1 g der Verbindung t-$C_4H_9$-S-$CH_2$-CH(OH)-$CH_2$-N(-$CH_2$-$CH_2$-OH)$_2$, 20,2 g Vanadylethylat und 150 ml Toluol werden 30 Minuten unter Rühren am Rückfluß erwärmt. Nach dem Abkühlen auf 20°C werden die ausgefallenen Kristalle isoliert, mit Petrolether gewaschen und getrocknet.

Ausbeute : 27,7 g = 88% der Theorie, schwach gelbe Kristalle mit einem Smp. 148-151°C der Verbindung der Formel

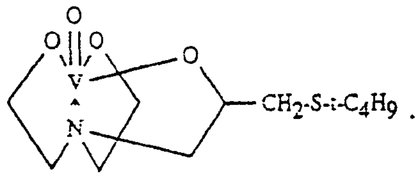

Die Verbindungen der Beispiele 9,10,11 und 12 (Tabelle II) werden analog zu Beispiel 8 hergestellt. Bei nichtkristallinen Endprodukten wird nach beendeter Reaktion das Lösungsmittel Toluol/Alkohol abdestilliert.

Tabelle II:

| Beispiel | Formel | Analyt. Daten | Bemerkungen |
|---|---|---|---|
| 9 | 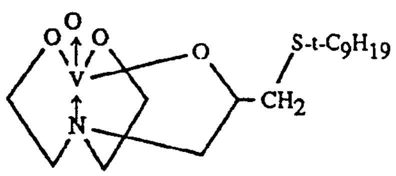 | Wachs (olivgrün) $n_D^{20}$: 1,4769 von Lsg. (1:1) in DMF | Aus Toluol/Petrolether umkristallisiert |
| 10 | 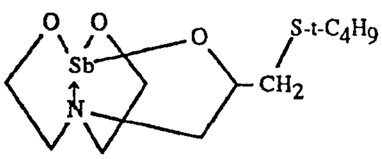 | Harz (farblos) Fp.: 85-90°C | als Metallverbindung wurde Sb-tri-i-propylat verwendet |
| 11 | 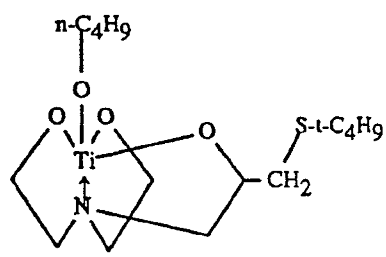 | Harz (farblos) $n_D^{20}$: 1,5258 von Lsg. (1:1) in Toluol | als Metallverbindung wurde Ti(-O-n-$C_4H_9$)$_4$ verwendet |
| 12 | 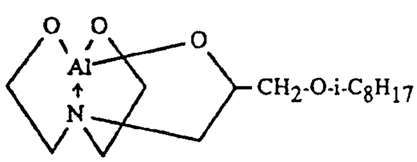 | viskose Flüssigkeit $n_D^{40}$: 1,4813 | als Metallverbindung wurde Aluminium-tri-i-propylat verwendet |

Beispiel 13 : Test auf Eignung als Hochdruck- und Verschleißschutzmittel

Zur Prüfung auf Eignung als Verschleißschutzadditiv wird die ASTM-Standardmethode D-2783-81 unter Verwendung des Shell-Vierkugelapparates herangezogen. Als Basisöl wird STOCK 305 der Fa. Mobil verwendet, dem die in der Tabelle angegebene Menge an Verbindung gemäß dem jeweils genannten Beispiel zugegeben wird. Ermittelt wird der mittlere Verschleiß-Narben-Durchmesser WSD (Wear-Scar-Diameter) bei einer Last von 400 N nach zwei Stunden Betrieb bei 60°C (in mm).

Die erhaltenen Resultate sind in Tabelle III aufgeführt. Geringer Durchmesser der Verschleißnarbe bedeutet Eignung als Verschleißschutzmittel.

Tabelle III:

| Verbindung aus Beispiel | Zusatzmenge [%] | WSD [mm] |
|---|---|---|
| ohne Zusatz | - | 0.96 |
| 5 | 0.5<br>1.0 | 0.86<br>0.86 |

## Patentansprüche

1. Zusammensetzungen enthaltend
   a) eine funktionelle Flüssigkeit oder einen Verbrennungsmotorentreibstoff und
   b) wenigstens eine Verbindung der allgemeinen Formel I

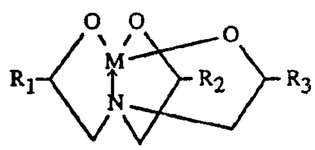

(I),

worin $R_1$ die Bedeutung von $-(CH_2-X)_n-R$ hat, wobei X = -S- oder -O- bedeutet, n = 0 oder 1 ist und R eine Alkylgruppe mit 1 bis 18 C-Atomen, eine Phenylgruppe, eine mit wenigstens einer $C_1$-$C_{18}$-Alkylgruppe substituierte Phenylgruppe, eine Phenyl-$C_1$-$C_4$-Alkylgruppe oder eine mit wenigstens einer $C_1$-$C_4$-Alkylgruppe substituierte Phenyl-$C_1$-$C_4$-Alkylgruppe bedeutet, oder $R_1$ eine Alkylgruppe mit 1 bis 18 C-Atomen, die mit wenigstens einer OH-Gruppe substituiert ist, bedeutet, oder $R_1$ eine Gruppe

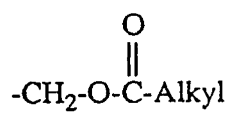

,

wobei die Alkylgruppe 1 bis 18 C-Atome aufweist, bedeutet und $R_2$ und $R_3$ gleich oder verschieden sind und die Bedeutung von -H oder, unabhängig von $R_1$, die gleichen Bedeutungen wie $R_1$ haben, und M die Bedeutung von B, Al, Fe, Cr, Sb, Bi oder VO hat, oder M die Bedeutung einer Gruppe M'-R'oder einer Gruppe M'-OR", wobei M' die Bedeutung von Ti, Zr oder Sn hat und R' und R" die Bedeutung von $C_1$-$C_{18}$-Alkyl oder R' die Bedeutung von

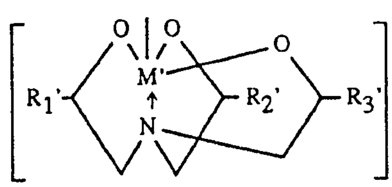

hat, wobei M' die obige Bedeutung hat und $R_1'$, $R_2'$ und $R_3'$ die Bedeutungen von $R_1$, $R_2$ und $R_3$ haben, oder R" die Bedeutung von Li, Na oder K oder von

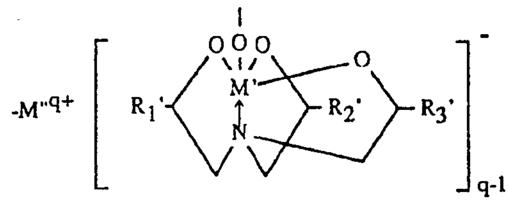

hat, wobei M' die obige und M'' die Bedeutung von Mg, Ca, B, Al, Fe, Cr, Sb, Bi, Zn, Ti, Ni oder Cu haben, q die Wertigkeit von M'' bedeutet und $R_1'$, $R_2'$ und $R_3'$ die Bedeutung des jeweiligen $R_1$, $R_2$ und $R_3$ haben.

2. Zusammensetzungen gemäß Anspruch 1, enthaltend Verbindungen der Formel I, worin M die Bedeutung von B, Al, Fe, VO oder Ti-O-$C_4$-$C_8$-Alkyl hat.

3. Zusammensetzungen gemäß Anspruch 1, enthaltend Verbindungen der Formel I, worin $R_1$ die Bedeutung von -$CH_2$-S-$C_4$-$C_{12}$-Alkyl, von -$CH_2$-O-$C_4$-$C_{12}$-Alkyl, von -$CH_2$-O-CO-$C_4$-$C_{12}$-Alkyl, von

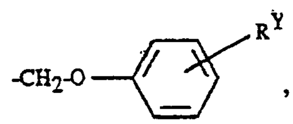

,

wobei $R^Y$ = Alkyl mit 4 bis 18 C-Atomen ist, oder von

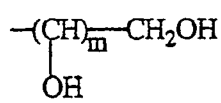

hat, wobei m = 1,2 oder 3 ist, und $R_2$ und $R_3$, unabhängig voneinander, die Bedeutung von -H oder von $R_1$ haben.

4. Zusammensetzungen gemäß Anspruch 1, enthaltend Verbindungen der Formel I, worin $R_1$ die in Anspruch 1 genannte Bedeutung hat und $R_2$ und $R_3$ Wasserstoff bedeuten oder worin $R_1$ und $R_2$, mit Ausnahme von Wasserstoff, die in Anspruch 1 genannten Bedeutungen haben und $R_3$ Wasserstoff ist.

5. Zusammensetzungen gemäß Anspruch 1, enthaltend Verbindungen der Formel I, worin $R_1$ die Bedeutung von -$CH_2$-S-$C_4$-$C_{12}$-Alkyl, von -$CH_2$-O-CO-$C_8$-$C_{12}$-Alkyl und $R_2$ und $R_3$ die Bedeutung von -H haben.

6. Zusammensetzungen gemäß Anspruch 1, enthaltend Verbindungen der Formel I, worin $R_1$ und $R_2$ die Bedeutung von -$CH_2$-S-$C_4$-$C_{12}$-Alkyl haben und $R_3$ -H bedeutet.

7. Zusammensetzungen gemäß Anspruch 1, enthaltend wenigstens eine der Verbindungen der Formel I,

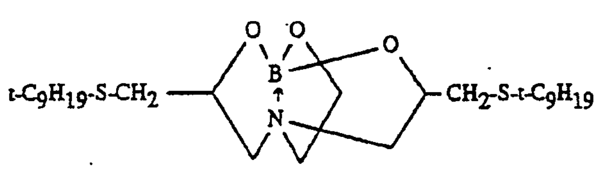

und

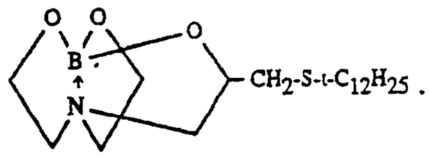

8. Zusammensetzungen, enthaltend
   a) eine funktionelle Flüssigkeit aus der Reihe der Schmierstoffe, der Hydraulikflüssigkeiten oder der Metallbearbeitungsflüssigkeiten und
   b) wenigstens eine Verbindung der allgemeinen Formel I nach Anspruch 1.

9. Zusammensetzungen enthaltend
   a) einen Verbrennungsmotorentreibstoff und
   b) wenigstens eine Verbindung der allgemeinen Formel I nach Anspruch 1.

10. Zusammensetzungen nach Anspruch 9 enthaltend
    a) einen Dieselmotorentreibstoff und
    b) wenigstens eine Verbindung der allgemeinen Formel I.

11. Verfahren zur Herstellung von Verbindungen der Formel I gemäß Anspruch 1, dadurch gekennzeichnet, daß man eine Verbindung der Formel II

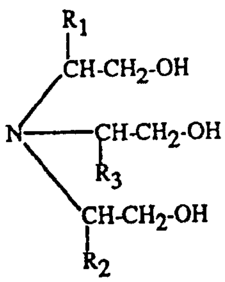

(II),

worin $R_1$, $R_2$ und $R_3$ die in Anspruch 1 angegebenen Bedeutungen haben, mit einer Verbindung der Formel III

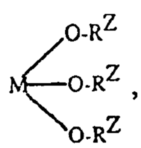

wobei $R^Z$ -H oder $C_1$-$C_8$-Alkyl bedeutet, und M die in Anspruch 1 angegebene Bedeutung hat, umsetzt.

12. Verwendung der Verbindungen der Formel I gemäß Anspruch 1 als Verschleißschutzadditive und Extremdruckadditive in funktionellen Flüssigkeiten.

13. Verwendung der Verbindungen der Formel I gemäß Anspruch 1 als Additive in Verbrennungsmaschinentreibstoffen.

14. Verwendung der Verbindungen der Formel I gemäß Anspruch 1 als Stabilisatoren in natürlichen, halbsynthetischen oder synthetischen organischen Materialien.

15. Verwendung der Verbindungen der Formel I gemäß Anspruch 1 als Stabilisatoren für thermoplastische Kunststoffe.

16. Verbindungen der allgemeinen Formel I

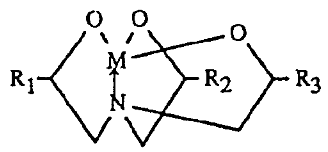 ,

worin M die Bedeutung von B hat und worin $R_1$ die Bedeutung von $-CH_2-S-R$ hat, wobei R eine Alkylgruppe mit 1 bis 18 C-Atomen, eine Phenylgruppe, eine mit wenigstens einer $C_1$-$C_{18}$-Alkylgruppe substituierte Phenylgruppe, eine Phenyl-$C_1$-$C_4$-Alkylgruppe oder eine mit wenigstens einer $C_1$-$C_4$-Alkylgruppe substituierte Phenyl-$C_1$ -$C_4$-Alkylgruppe bedeutet und $R_2$ und $R_3$, unabhängig voneinander, die Bedeutung von -H oder, unabhängig von $R_1$, die gleichen Bedeutungen wie $R_1$ haben, oder Verbindungen der Formel I, worin M die Bedeutung von Al, Fe, Cr, Sb, Bi oder VO hat und worin $R_1$ die Bedeutung von $-(CH_2-X)_n-R$ hat, wobei X = -S- oder -O- bedeutet, n = 0 oder 1 ist und R eine Alkylgruppe mit 1 bis 18 C-Atomen, eine Phenylgruppe oder eine mit wenigstens einer $C_1$-$C_{18}$-Alkylgruppe substituierte Phenylgruppe, eine Phenyl-$C_1$-$C_4$-Alkylgruppe oder eine mit wenigstens einer $C_1$-$C_4$-Alkylgruppe substituierte Phenyl-$C_1$-$C_4$-Alkylgruppe bedeutet, oder $R_1$ eine Alkylgruppe mit 1 bis 18 C-Atomen, die mit wenigstens einer OH-Gruppe substituiert ist, bedeutet, oder $R_1$ eine Gruppe

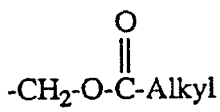 ,

wobei die Alkylgruppe 1 bis 18 C-Atome aufweist, bedeutet und $R_2$ und $R_3$ gleich oder verschieden sind und die Bedeutung von -H oder, unabhängig von $R_1$, die gleichen Bedeutungen wie $R_1$ haben, oder Verbindungen der Formel I, worin M die Bedeutung einer Gruppe M'-R' oder einer Gruppe M'-OR", wobei M' die Bedeutung von Ti, Zr oder Sn hat und R'und R" die Bedeutung von $C_1$-$C_{18}$-Alkyl oder R' die Bedeutung von

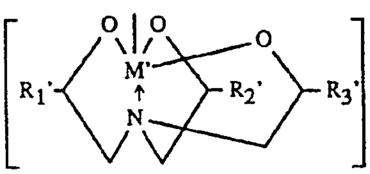

hat, wobei M' die obige Bedeutung hat und $R_1'$, $R_2'$ und $R_3'$ die Bedeutungen von $R_1$, $R_2$ und $R_3$, wie oben angegeben, haben, oder R" die Bedeutung von Li, Na oder K oder von

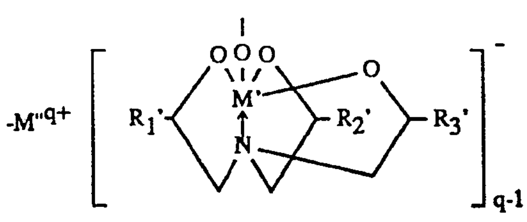

hat, wobei M' die obige und M" die Bedeutung von Mg, Ca, B, Al, Fe, Cr, Sb, Bi, Zn, Ti, Ni, Cu oder Pb haben, q die Wertigkeit von M" bedeutet und $R_1'$, $R_2'$ und $R_3'$ die Bedeutung des jeweiligen $R_1$, $R_2$ und $R_3$ haben.

**17.** Verbindungen der Formel I gemäß Anspruch 16, worin $R_1$ die Bedeutung von $-CH_2-S-R$ hat, wobei R eine Alkylgruppe mit 1 bis 18 C-Atomen bedeutet und $R_2$ und $R_3$, unabhängig voneinander, die Bedeutung von -H oder mit bis zu 6 Hydroxygruppppen substituiertem $C_1$-$C_{12}$-Alkyl oder, unabhängig von $R_1$, die gleichen Bedeutungen wie $R_1$ haben,